# EUROPEAN PATENT APPLICATION

(11) **EP 4 265 448 A1**
(43) Date of publication of application: **25.10.2023**
(21) Application number: 22169479.7
(22) Date of filing: 22.04.2022
(51) Int. Cl.: B60H 1/00, B60H 1/32

(54) **FLUID MANAGEMENT MODULE FOR A VEHICLE**

(71) Applicant: VALEO SYSTEMES THERMIQUES, 78320 Le Mesnil Saint-Denis (FR)
(72) Inventor: FIENE, Andreas, Hockenheim (DE); BELZOWSKI, Michal, Skawina (PL); STRAMECKI, Tomasz, Skawina (PL); JURKIEWICZ, Damian, Skawina (PL)
(74) Representative: Valeo Systèmes Thermiques

(57) **Abstract**

A fluid management module for a vehicle, comprising:
- a block (2) for the distribution of the fluid in the module (1), said block comprising at least a valve (4),
- a unit (3) for the circulation of the fluid in the module (1), the unit (3) comprising at least a plate (20), called transferring plate, shaped to form at least one channel (21) for receiving the fluid, and a plate (22), called support plate, the support plate (22) being flat,
the block (2) and the unit (3) being fluidly connected together, the valve (4) being configured to distribute the fluid in the channel (21) of the unit (3).

## Description

### Technical Field

This disclosure pertains to the field of thermal management systems for a vehicle.

### Background Art

Modern vehicles have thermal management systems such as cooling/heating circuits to provide comfort functions for the users of the vehicle and to ensure a necessary temperature control of components such as drive components. Cooling/heating circuits essentially consist of thermal management components such as pumps, valves and heat exchangers, and of components that serve to guide a fluid and that fluidically connect the thermal management components with each other, such as fluid management modules. The fluid flows back and forth in the circuits and exchanges energy with the air of the cabin's vehicle, which ensures the thermal management of the air.

The development of the electric vehicles has increased the need of optimized air conditioning systems as well as heat pump systems with simplified and cost-effective processes of manufacturing.

### Summary

This disclosure improves the situation.

It is proposed a fluid management module for a vehicle, comprising: a block for the distribution of the fluid in the module, said block comprising at least a valve, a unit for the circulation of the fluid in the module, the unit comprising at least a plate, called transferring plate, shaped to form at least one channel for receiving the fluid, and a plate, called support plate, the support plate being flat, the block and the unit being fluidly connected together, the valve being configured to distribute the fluid in the channel of the unit.

Thanks to the module, the unit can be managed by the block, the valve distributing the fluid in the channels, which ensures an optimized functioning of the thermal management of the vehicle while simplifying the process of manufacturing of the module.

In another aspect, the support plate is disposed between the block and the transferring plate.

In another aspect, the support plate comprises at least a hole in front of the channels of the transferring plate, said hole being arranged to be located in front of the valve.

In another aspect, curvatures of the transferring plate constitute the channels.

The present disclosure is also about a unit for the circulation of a fluid in a fluid management module, the unit comprising at least a plate, called transferring plate, shaped to form at least one channel for receiving the fluid, and a plate, called support plate, the support plate being flat, the unit being arranged to cooperate with a block for the distribution of the fluid in the module, said block comprising at least a valve, the unit being arranged to be fluidly connected to the block in a functioning position of the module such that the fluid is distributed in the channel by the valve.

In another aspect, the process comprises a step of forming the block by machining and a step of forming the unit by an operation distinct from machining.

In another aspect, the step of forming the unit comprises a step of forming the channels by extrusion or stamping of a plate.

In another aspect, the support plate and the transferring plate are attached together by welding or brazing.

In another aspect, a valve body of the block is attached to the hole.

In another aspect, the block and the unit are fixed by welding, brazing, vacuum holding, gluing, mechanical fixation.

The present disclosure is also about a fluid management module for a vehicle, comprising: a block for the distribution of the fluid in the module, said block comprising at least a valve, the valve having a valve body provided with a bore and a plunger configured to reciprocate within said bore, the valve body stemming from a machining process, - a unit for the circulation of the fluid in the module, comprising a plate, called transferring plate, shaped to form at least one channel for receiving the fluid, and another plate, called support plate, the support plate being flat, said transferring plate and support plate stemming from a process excluding a machining process.

In another aspect, the support plate is disposed between the block and the transferring plate.

In another aspect, the support plate comprises at least a hole in front of the channels of the transferring plate, said hole being arranged to receive a valve body of the valve.

In another aspect, curvatures of the transferring plate constitute the channels.

In another aspect, the curvatures are made from extrusion or stamping.

### Brief Description of Drawings

Other features, details and advantages will be shown in the following detailed description and on the figures, on which:
Fig. 1

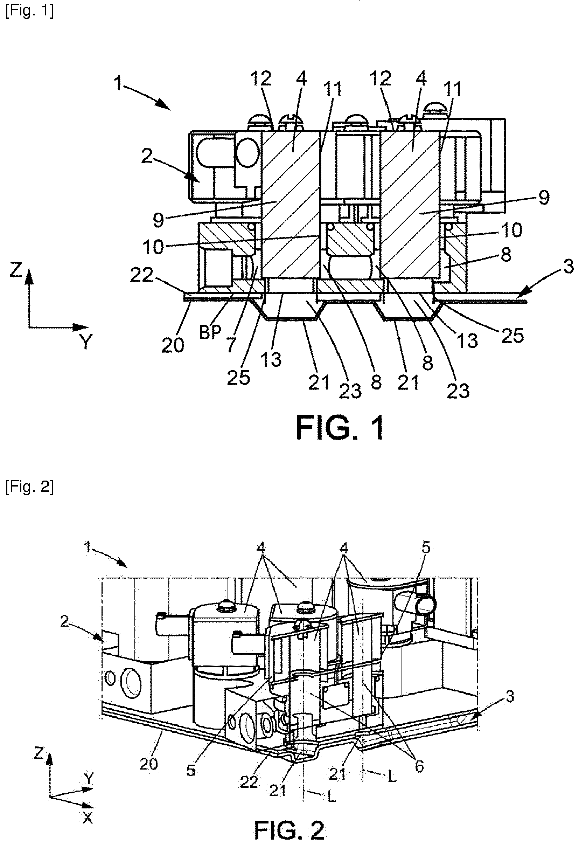

   [Fig. 1] is a sectional view of a fluid management module according to an embodiment.
Fig. 2
   [Fig. 2] is a perspective view of the module of figure 1 with a partial section.

### Description of Embodiments

On the figures, there is drawn a triplet of axis (X, Y, Z) to guide the reader with the spatial orientation.

As can be seen from the figures, a fluid management module is referred to as 1. The fluid management module 1 is also called hub 1. The hub 1 is intended to be part of a thermal management system of a vehicle in which the fluid flows in an air conditioning and/or a heat pump circuits. In this system, the air temperature is controlled by thermal exchanges of the air with the fluid in said circuits.

The hub 1 comprises a block 2 for the distribution of the fluid in the hub 1 and a unit 3 for the circulation of the fluid in the hub 1.

The block 2 is now detailed.

The block 2 comprises at least one valve. On the figures, the block 2 comprises several valves, referenced 4. The valves 4 can be shut-off valves, progressive valves, EXV (for electronic expansion valve) or TXV (for thermostatic expansion valve).

As can be seen from figure 2, each valve 4 comprises a valve body 5 provided with a bore 6. The bore 6 longitudinally extends along an axis L parallel to the Z axis. The valve body 5 is also provided with openings 7, 8 for the distribution of the fluid by the valve 4.

As can be seen from figure 1, a plunger 9 is disposed in the bore 6 such that an external wall 10 of the plunger 9 contacts an inner wall 11 of the valve body 5. The external wall 10 of the plunger 9 extends longitudinally from an upper end 12 to a bottom end 13.

The plunger 9 is arranged to reciprocate from a closed position (figure 1) to an open position (not illustrated). In the closed position, the plunger 9 forbids any distribution of the fluid in the valve 4, whereas, in the open position, the bottom end 13 is located above the openings 7, 8, which authorizes the fluid distribution.

Preferably, the block 2 stems from a machining process that ensures high precision in the shaping of the block. Said differently, the block 2 can be considered as a high requirement zone, since the movement of the plunger 9 in the bore 6 should be accurately controlled and hence necessitates an as exact form of the bore 6 as possible. And a machining process gives optimal results when removing material.

The block 2 can be made of a metallic material, like aluminum, which ensures a good rigidity, even though the invention is not limited to this material. Depending on the pressure of the fluid in the hub 1, the block 2 could be made of plastic (for low pressures of the fluid).

The unit 3 is now detailed.

As can be seen from the figures, the unit 3 comprises at least a plate, called transferring plate, that is referenced 20. The transferring plate 20 is shaped to form at least one channel or corrugation 21 for the circulation of the fluid. In other words, curvatures of the transferring plate 20 constitute passages that form the channels 21.

In the illustrated embodiment, the unit 3 comprises two plates, even though the number of plates is not limited to two.

As shown in figures 1 and 2, the other plate of the unit 3 is referenced 22 and called support plate 22. The support plate 22 is configured to interface the unit 3 with the block 2. The support plate 22 is flat to contact a bottom part BP of the block 2. The support plate 22 is situated between the block 2 and the bottom plate 20 in a (Y, Z) plane.

The support plate 22 comprises holes 23, each hole 23 being arranged to receive an end 25 of the block 2.

The holes 23 are in front of the channels 21, such that the unit 3 and the block 2 are in a fluidic relationship. The block 2 and the unit 3 fluidly connect each other, the fluid in the hub 1 being distributed in the channels 21 by the valves 4.

Preferably, the valve body 5 is attached to the support plate 22 by crimping, which guarantees sealing between the unit 3 and the block 2.

The plates 20, 22 can be made of a metallic material, like aluminum, which ensures a god rigidity, even though the invention is not limited to this material. Depending on the pressure of the fluid in the hub 1, the plates 20, 22 could be made of plastic (for low pressures of the fluid).

The channels 21 of the transferring plate 20 are preferably obtained by an extrusion process or a stamping process of a planar plate even though the invention is not limited to such a process. It should be noted that none of the plates 20, 22 of the unit 3 results from machining.

Advantageously, the unit 3 is manufactured before its fixation to the block 2. The plates 20, 22 are assembled by welding or brazing (a brazing foil or ring can be added to improve brazeability) or gluing, depending on the nature of the plates.

The connection of the block 2 to the unit 3 can be made by welding, brazing, vacuum holding, gluing, or even by fixing with screws, with, in this case, a gasket between the block 2 and the support plate 22, and holes in the support plate 22 and the transferring plate 20.

It is worth noting that the transferring plate 20 not only conducts the fluid, but it also increases the stiffness of the hub 1 thanks to its corrugations 21. In addition, the transferring plate 21 has also a poka yoke function thanks to the position of the channels 21.

The described embodiment of the hub 1 has the advantage that the transferring plate 20 only comprises the channels 21. In other words, the present invention suppresses any channel part from the block. Apart from the weight of such a part, which is machined in a block of metal, the machining itself is reduced.

The described embodiment of the hub 1 has the advantage that only the block 2 should be machining, only along the Z axis, given that the unit 3 can be considered as a low requirement zone. Thus, the hub 1 is lighter and cheaper than the known hubs.

The described embodiment of the hub 1 ensures a flexibility in the manufacturing process since the unit 3 can be prepared independently and then the valves 4 can all be fixed, simultaneously or one by one, to the unit 3.

The choice of the material of the plates and their assembling process is also flexible, since it can be adapted to the application of the hub 1.

The present disclosure is also about the unit 3 itself, as already described.

The present disclosure is also about the process of manufacturing of the hub 1, the steps being already described.

## Claims

1. A fluid management module for a vehicle, comprising:
- a block (2) for the distribution of the fluid in the module (1), said block comprising at least a valve (4),
- a unit (3) for the circulation of the fluid in the module (1), the unit (3) comprising at least a plate (20), called transferring plate, shaped to form at least one channel (21) for receiving the fluid, and a plate (22), called support plate, the support plate (22) being flat,
the block (2) and the unit (3) being fluidly connected together, the valve (4) being configured to distribute the fluid in the channel (21) of the unit (3).

2. A fluid management module for a vehicle according to claim 1, wherein the support plate (22) is disposed between the block (2) and the transferring plate (21).

3. A fluid management module for a vehicle according to claim 2, wherein the support plate (22) comprises at least a hole (23) in front of the channels (21) of the transferring plate (20), said hole (23) being arranged to be located in front of the valve (4).

4. A fluid management module for a vehicle according to any claims 1 to 3, wherein curvatures of the transferring plate (20) constitute the channels (21).

5. A fluid management module for a vehicle according to the preceding claim, wherein the curvatures are made from extrusion or stamping.

6. A unit for the circulation of a fluid inside a fluid management module (1) for a vehicle according to any claims 1 to 5, the unit (3) comprising at least a plate (20), called transferring plate, shaped to form at least one channel (21) for receiving the fluid, and a plate (22), called support plate, the support plate (22) being flat, the unit (3) being arranged to cooperate with a block (2) for the distribution of the fluid in the module (1), said block comprising at least a valve (4), the unit (3) being arranged to be fluidly connected to the block (2) in a functioning position of the module (1) such that the fluid is distributed in the channel (21) by the valve (4).

7. A process for manufacturing a fluid management module for a vehicle according to any claims 1 to 5, comprising a step of forming the block (2) by machining and a step of forming the unit (3) by an operation distinct from machining.

8. A process according to claim 7 for manufacturing a fluid management module for a vehicle according to any claims 1 to 5, wherein the step of forming the unit (3) comprises a step of forming the channels (21) by extrusion or stamping of a plate.

9. A process according to claim 8 for manufacturing a fluid management module for a vehicle according to claims 1 to 5, wherein the support plate (22) and the transferring plate (20) are attached together by welding or brazing.

10. A process according to any claims 7 to 9 for manufacturing a fluid management module for a vehicle according to claim 3 or 5, wherein a valve body (5) of the block (2) is attached to the hole (23).

11. A process according to any claims 7 to 10 for manufacturing a fluid management module for a vehicle according to claims 1 to 5, wherein the block (2) and the unit (3) are fixed by welding, brazing, vacuum holding, gluing, mechanical fixation.

12. A fluid management module for a vehicle, comprising:
- a block (2) for the distribution of the fluid in the module (1), said block (2) comprising at least a valve (4), the valve (4) having a valve body (5) provided with a bore (6) and a plunger (9) configured to reciprocate within said bore (6), the valve body (5) stemming from a machining process,
- a unit for the circulation of the fluid in the module (1), comprising a plate, called transferring plate (20), shaped to form at least one channel for receiving the fluid, and another plate, called support plate (22), the support plate being flat, said transferring plate (20) and support plate (22) stemming from a process excluding a machining process.

13. A fluid management module for a vehicle according to claim 12, wherein the support plate (22) is disposed between the block (2) and the transferring plate (21).

14. A fluid management module for a vehicle according to claim 13, wherein the support plate (22) comprises at least a hole (23) in front of the channels (21) of the transferring plate (20), said hole (23) being arranged to receive a valve body (5) of the valve (4).

15. A fluid management module for a vehicle according to any claims 12 to 14, wherein curvatures of the transferring plate (20) constitute the channels (21).
